# EUROPEAN PATENT SPECIFICATION

(11) **EP 0 607 634 B1**
(45) Date of publication and mention of the grant of the patent: **31.03.1999**
(21) Application number: 93203683.3
(22) Date of filing: 24.12.1993
(51) Int. Cl.: H04N 5/32

(54) **X-ray examination apparatus**
Röntgenuntersuchungsgerät
Apapreil d'examen radiologique

(30) Priority: 04.01.1993 EP 93200007
(43) Date of publication of application: 27.07.1994
(73) Proprietor: Koninklijke Philips Electronics N.V., 5621 BA Eindhoven (NL)
(72) Inventor: Crins, Wilhelmus Antonius, NL-5656 AA Eindhoven (NL); Van den Berk, Wilhelmus Martinus Adrianus, NL-5656 AA Eindhoven (NL); Von Reth, Eric Albert, NL-5656 AA Eindhoven (NL); Rijpert, Hermanus Petrus Maria, NL-5656 AA Eindhoven (NL)
(74) Representative: Schouten, Marcus Maria

(56) References cited:
- EP-A- 0 114 369
- EP-A- 0 128 764
- EP-A- 0 381 119
- EP-A- 0 562 657
- US-A- 5 003 572
- PHYSICS IN MEDICINE AND BIOLOGY, vol.37, no.2, 1992, UK page 325 - 342, COWEN ET AL 'A PHYSICAL IMAGE QUALITY EVALUATION OF A DIGITAL SPOT FLUROGRAPHY SYSTEM'

## Description

The invention pertains to an x-ray examination apparatus as defined in the pre-amble of Claims 1 and 5 respectively.

An x-ray examination apparatus of said kind is know from US-A-5 003 572. The known x-ray examination apparatus derives an analog image signal from the x-ray image.

It is *inter alia* an object of the invention to provide an x-ray examination apparatus comprising an imaging arrangement for producing an amplified video signal having improved signal-to-noise ratio and which amplified video signal is made available in digital format.

This is achieved in that an x-ray examination apparatus in accordance with the invention as defined in Claim 1. Advantageous embodiments are defined in the dependent Claims 2 to 4 and in the independent Claim 5.

A major contribution to a noise level of the amplified video signal is constituted by electronic noise that is produced by electronic components in the imaging arrangement, such as the image acquisition device and the video amplifier. The electronic noise level decreases, and consequently the signal-to-noise ratio increases as the average signal amplitude of the amplified video signal increases. Thus the noise level of the amplified video signal is decreased toward the noise level associated with the shot noise of the x-ray photons by amplifying the primary video signal. The amplification rate is to be selected in dependence on the value of the average of the primary video signal in order to avoid saturation of the imaging arrangement.

The x-ray apparatus in accordance with the invention is characterised in that the imaging arrangement comprises white-compression adjustment means for adjusting white-compression in dependence on the primary video signal.

For further digital processing the amplified video signal having an analog format is converted into a digital format by an analog-to-digital converter. Known analog-to-digital converters have a fixed input range. In order to be able to match a dynamic range of the amplified video signal to the range of the analog-to-digital converter white compression is performed on the amplified video signals supplied by the video amplifier so as to convert the dynamic range of the amplified video signal to the range of the analog-to-digital converter. It is noted that it is known *per se* from Phys. Med. Biol. 37(1992)325-342 in the field of x-ray imaging to employ white compression for matching the dynamic range of the amplified video signal to the range of the analog-to-digital converter. In that reference an imaging arrangement is described wherein a video amplifier having a fixed amplification ratio is employed. Because the dynamic range of the amplified video signal is dependent on the amplification rate applied to the primary video signal, white compression is to be adapted to the amplification rate in order to improve suppression of electronic noise of a digital video signal. Because white-compression inevitably compresses imaging information, increasing the amplification of the primary video signal should be carried out at an amplification rate which is sufficiently high for successful noise reduction, but is sufficiently low so that no excessive white-compression needs to be performed. Therefore, both adjustment of video amplification and white-compression are made in dependence of a average brightness and dynamic range of the x-ray image acquired by the image acquisition device.

The x-ray examination apparatus in accordance with the invention is characterised in that said white-compression adjustment means comprises a memory device for storing a collection of white-compression curves and a selection device for selecting in dependence on the primary video signal a white-compression curve.

White-compression is carried out by employing a white-compression curve which is e.g. stored in a look-up-table. The white-compression curve defines a function which converts the dynamic range of the amplified video signal into signal amplitudes having a more narrow range. This is achieved in that especially higher signal amplitudes of the amplified video signal are more compressed. Adjusting white-compression thus amounts to adjusting an associated white-compression curve. To that end a collection of white-suppression curves is provided from which by way of the imaging control means an appropriate white-compression curve is selected for performing white-compression on an amplified video signal at issue.

A preferred embodiment of an x-ray examination apparatus in accordance with the invention is characterised in that the x-ray examination apparatus comprises a designation means for supplying in dependence on the primary video signal a control signal to the selection device for controlling selection of a white-compression curve.

Selection of an adjustment of the video amplifier and of a white compression curve can be performed manually from a control desk. From a control desk a signal in correspondence with a imaging parameters is supplied to the imaging control means. The designation means comprises a command means coupled to the selection means and incorporated in a control desk from which an appropriate white compression curve and amplification ratio can be selected by activating the signalling device for controlling the selection device.

A further preferred embodiment of an x-ray examination apparatus in accordance with the invention is characterised in that the imaging arrangement comprises an arithmetic circuit for determining a dynamic range of a fluoroscopic x-ray image and calculating therefrom a dynamic range of an x-ray exposure image.

A dynamic range and average value of signal amplitudes of a primary video signal associated with an x-ray exposure image can be computed from a dynamic range of a primary video signal associated with an x-ray fluoroscopic image that is made prior to x-ray exposure. Thus selection of an appropriate white-compression is carried out by first determining the dynamic range and average signal amplitude for a fluoroscopic image and calculating a dynamic range and required video amplification rate for an x-ray exposure that is to follow fluoroscopy. On the basis of the required amplification rate and calculated dynamic range an appropriate white-compression curve is selected by the image-control.

A further preferred embodiment of an x-ray examination apparatus in accordance with the inventiorr is characterised in that the imaging arrangement comprises an arithmetic circuit arranged for determining a dynamic range of a pre-irradiation x-ray image and calculating therefrom a dynamic range of an x-ray exposure image.

A dynamic range and average value of signal amplitudes of a primary video signal associated with an x-ray exposure image can be computed from a dynamic range of a primary video signal associated with a pre-irradiation x-ray image that is made prior to x-ray exposure. Thus selection of an appropriate white-compression is carried out by first determining the dynamic range and average signal amplitude for a pre-irradiation image and calculating a dynamic range and required video amplification rate for an x-ray exposure that is to follow fluoroscopy. On the basis of the required amplification rate and calculated dynamic range an appropriate white-compression curve is selected by the image-control means.

An imaging arrangement suitable for use in an x-ray examination apparatus in accordance with the invention preferably comprises a video amplifier for converting the primary video signal into an amplified video signal, said video amplifier having a control-input being coupled to the imaging control means for adjusting an amplification ratio of the video amplifier in dependence on an average value of signal amplitudes of the primary video signal.

An imaging arrangement suitable for use in an x-ray examination apparatus in accordance with the invention preferably also comprises white-compression adjustment means for adjusting white-compression in dependence on the primary video signal.

These and other aspects of the invention will become apparent from and elucidated with reference to the embodiments described hereinafter and with reference to the accompanying drawing.

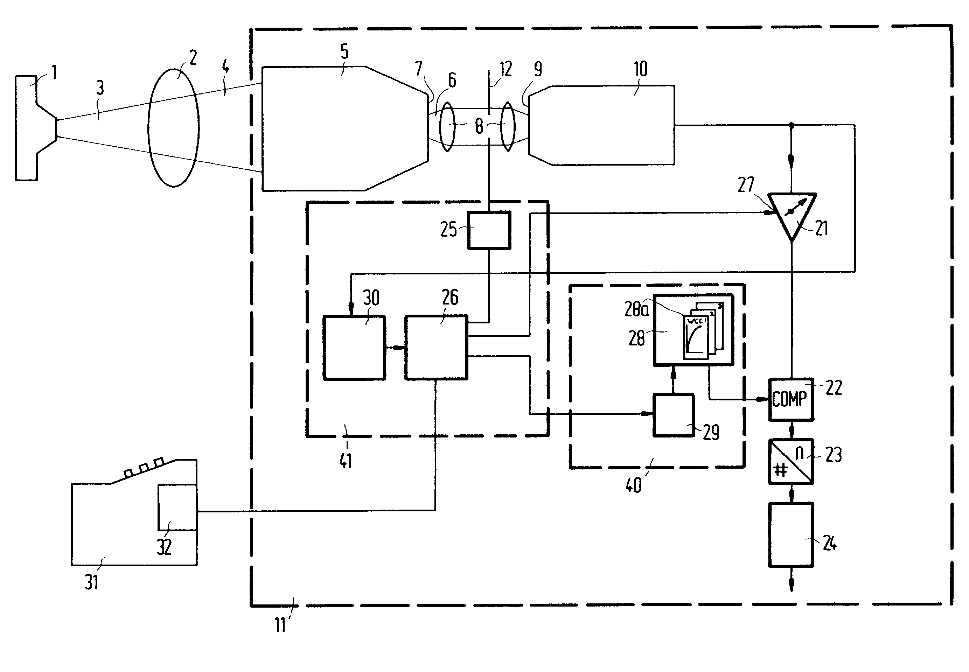

Figure 1 shows a block diagram of an x-ray examination apparatus in accordance with the invention.

Figure 1 shows a block diagram of an x-ray examination apparatus in accordance with the invention. An x-ray source 1 is provided for irradiating an object 2, notably a patient, with x-radiation 3. By absorption modulation within the object an image carrying x-ray beam 4 is formed. By means of an x-ray image intensifier 5 the image carrying x-radiation is detected and converted into image carrying visible radiation 6, i.e. radiation having a wavelength in the region of wavelengths between a wavelength of ultraviolet radiation and a wavelength of infrared radiation, Thus an x-ray image is converted into a corresponding visible image which is formed on an output screen 7 of the x-ray image intensifier. By means of an optical arrangement 8, the visible image is imaged on an image recording elememt 9 of an image acquisition device subsequently recorded by an image-acquisition-device 10, notably a video camera comprising a television pick-up tube or a semiconductor image sensor. Thus, by means of an imaging arrangement 11, an x-ray image is converted into a visible image which is turned into a primary video signal which is further processed into a video signal for an image having an improved diagnostic quality.

The television pick-up tube there generates a primary video signal having signal amplitudes in correspondence with brightness values of the image formed on the output screen of the image intensifier. The primary video signal is amplified by an adjustable amplifier 21. An amplified video signal is supplied to a white-compression-device 22 for transforming the dynamic range of the amplified video signal so as to obtain a compressed analog video signal having a dynamic range being adjusted to the input-range of the an analog-to-digital converter 23 for forming a digital video signal which is supplied to a digital processing unit 24. Various electronic components such as the television camera 10 and the adjustable amplifier 21 add noise to the video signal. By increasing an average value of the signal amplitudes of the amplified video signal is improved. However, the average value of the signal cannot be increased indefinitely without compromising a dynamic range of the amplified video signal and a dynamic range of the digital processing unit 24. A field-limiting diaphragm 12 is provided for controlling an intensity of the image carrying visible radiation incident on the image recording element 9. By way of a diaphragm controller 25 the opening of the diaphragm is controlled. By the combination of adjusting the diaphragm 12 together with adjusting the video amplifier 21 provides for making available a range of amplification ratios for which the video amplifier 21 operates efficiently, while, although said range of amplification ratios may be limited, a comparatively wide range of values for which an average value of signal amplitudes of the amplified video signal can be obtained because the light intensity incident on the television camera can be controlled by way of the diaphragm.

The average signal amplitude of the amplified video signal is adjusted by adjusting the adjustable video amplifier 21 having an control-input 27 which is connected to the signalling-device 26. In order to sustain matching of a dynamic range of the amplified video signal to the input range of the analog-to-digital-converter 23, there is provided a collection 28a of white-compression-curves, e.g. being stored in a memory 28, together with a selection-device 29. The signalling-device 26 supplies a control signal to a control input 27 of the video amplifier for adjusting the amplification ratio of the video amplifier. In addition a selection signal is supplied by the signalling-device 26 to the selection-device 29 for selecting a white-compression curve from the collection 28a, the selected white-compression curve being appropriate for matching the dynamic range of the amplified video signal to the input range of the analog-to-digital-converter 23. A white-compression-adjustment-device 40 is formed by the signalling-device 26 together with the memory 28 and the selection-device. Consequently, in dependence of the dynamic range of the primary video signal the average signal the amplitude of the amplified video signal is set to such a level that the noise level of the amplified video signal is decreased towards the noise level pertaining to the shot noise due to the quantised nature of the x-radiation and by employing a suitable white compression curve, it is avoided that image artifacts are introduced when the amplified video signal is converted into a digital video signal.

The selection of a white compression curve can be performed manually from a control-desk 31. X-ray images have different dynamic ranges in various x-ray imaging applications such as e.g. vascular, surgical or urological examinations. Depending on a type of x-ray imaging circumstances, each of them giving rise to various known values of the dynamic range of the primary video signal, an operator of the x-ray apparatus can make a selection of a predetermined adjustment of the video amplifier and of an associated white-compression curve. To that end, there is incorporated in the control desk 31, a command-means 32 for supplying a control signal to the signalling-device 26 for activating said signalling-device 26 for supplying a relevant selection signal to the selection-device 29. A designation means for controlling selection of an appropriate white-compression curve is then formed by the command-means 32, together with the signalling-device 26 and the selection-device 29.

In addition there are provided various options for automatic selection of a white-compression curve. This has as a particular advantage that reducing electronic noise can be obtained for imaging circumstances for which an ensuing dynamic range and average video signal amplitude is less well-known. During fluoroscopy, preceding x-ray exposure, a dynamic range of a fluoroscopic image being acquired by the image acquisition-device 10 can be determined by supplying a fluoroscopic video signal to an arithmetic-circuit 30 for detecting a dynamic range of the fluoroscopic video signal and subsequently calculating a dynamic range of an x-ray image to be made by x-ray exposure. In the embodiment shown in Figure 1, an imaging-control-means 41 is formed by the signalling-device 26 together with the diaphragm-controller and the arithmetic circuit 30.

As an alternative to obtaining a dynamic range of an x-ray image from fluoroscopy, pre-irradiation of the object the arithmetic circuit 30 is arranged for determining a dynamic range of an x-ray image acquired from said pre-irradiation and subsequently calculating a dynamic range of an x-ray image to be made by x-ray exposure.

## Claims

1. An x-ray examination apparatus comprising
- an x-ray source (1) for producing an x-ray image by irradiating an object (2),
- an imaging arrangement (11) incorporating
- an x-ray image intensifier (5) for converting the x-ray image into a visible image,
- an image acquisition device (10) for acquiring the visible image produced on an output screen of the image intensifier (5) and producing a primary video signal, and
- imaging control means (41) for adjusting imaging parameters,
- a video amplifier (21) for converting the primary video signal into an amplified video signal,
- said video amplifier having a control input (27) being coupled to the imaging control means (41) for adjusting the amplification ratio of the video amplifier in dependence on the average value of signal amplitudes of the pnmary video signal,
characterised in that
- the imaging arrangement comprises
- an arithmetic-circuit (30) for detecting the dynamic range of the primary video signal,
- an analogue-to-digital converter (23) for deriving a digital video signal from the amplified video signal and
- a white compression device (22) for matching the dynamic range of the amplified video signal to the range of the analogue-to-digital converter,
- the white compression device being adjustable in dependence of the average value of signal amplitudes and dynamic range of the primary video signal and in that
- said white-compression adjustment means comprises a memory device (28) for storing a collection (28a) of white-compression curves and a selection device (29) for selecting in dependence on the primary video signal a white-compression curve.

2. An x-ray examination apparatus as claimed in Claim 1, characterised in that
- imaging arrangement comprises a signalling device (26) for supplying in dependence on the primary video signal a control signal to the selection device (29) for controlling selection of a white-compression curve.

3. An x-ray examination apparatus as claimed in any one of the preceding Claims, characterised in that
- the imaging arrangement comprises an arithmetic circuit (30) for determining a dynamic range of a fluoroscopic x-ray image and calculating therefrom a dynamic range of an x-ray exposure image.

4. An x-ray examination apparatus as claimed in any one of the preceding Claims, characterised in that
- the imaging arrangement compnses an anthmetic circuit (30) arranged for
- determining a dynamic range of a pre-irradiation x-ray image and
- calculating therefrom a dynamic range of an x-ray exposure image.

5. An x-ray examination apparatus comprising
- an x-ray source (1) for producing an x-ray image by irradiating an object (2),
- an imaging arrangement (11) incorporating
- an x-ray image intensifier (5) for converting the x-ray image into a visible image,
- an image acquisition device (10) for acquinng the visible image produced on an output screen of the image intensifier (5) and producing a primary video signal, and
- imaging control means (41) for adjusting imaging parameters,
- a video amplifier (21) for converting the primary video signal into an amplified video signal,
- said video amplifier having a control input (27) being coupled to the imaging control means (41) for adjusting the amplification ratio of the video amplifier,
characterized in that
- the imaging arrangement includes
- an analogue-to-digital converter (23) for deriving a digital video signal from the amplified video signal and
- a white compression device (22) for matching the dynamic range of the amplified video signal to the range of the analogue-to-digital converter,
- said white-compression adjustment means including a memory device (28) for storing a collection (28a) of white-compression curves and a selection device (29) for selecting a white-compression curve and
- a signalling device (26) for supplying a control signal to the selection device (29) for controlling selection of a white-compression curve and
- the x-ray examination apparatus comprises a control desk (31) including a command means (32)
- the command means (32) being coupled to the signalling device (26)
- the command means (32) being arranged for supplying a control signal to the signalling device (26) for activating the signalling device (26) for controlling the selecting device (29).

## Patentansprüche

1. Röntgenuntersuchungsgerät mit
- einer Röntgenquelle (1) zum erzeugen eines Röntgenbildes durch Anstrahlen eines Objekts (2),
- einer Abbildungsanordnung (11) mit
- einem Röntgenbildverstärker (5) zum Umsetzen des Röntgenbildes in ein sichtbares Bild,
- einer Bilderfassungseinrichtung (10) zum Gewinnen des an einem Ausgangsschirm des Bildverstärkers (5) erzeugten sichtbaren Bildes und zum Erzeugen eines primären Videosignals, und
- Abbildungssteuermitteln (41) zum Einstellen von Abbildungsparametern,
- einem Videoverstärker (21 zum Umsetzen des primären Videosignals in ein verstärktes Videosignal,
- wobei der Videoverstärker mit einem Steuereingang (27) an die Abbildungssteuermittel (41 zum Einstellen des Verstärkungsverhältnisses des Videoverstärkers abhängig vom Mittelwert von Signalamplituden des primären Videosignals gekoppelt ist,
dadurch gekennzeichnet, daß die Abbildungsanordnung folgendes enthält:
- eine Rechenschaltung (30) zum Detektieren des dynamischen Bereichs des primären Videosignals,
- einen Analog/Digitalwandler (23) zum Ableiten eines digitalen Videosignals aus dem verstärkten Videosignal, und
- eine Weißpegelkompressionsanordnung (22) zum Anpassen des dynamischen Bereichs des verstärkten Videosignals an den Bereich des Analog/Digitalwandlers,
- wobei die Weißpegelkompressionsanordnung abhängig vom Mittelwert von Signalamplituden und vom dynamischen Bereich des primären Videosignals einstellbar ist, und daß
- das Weißpegelkompressions-Einstellmittel eine Speicheranordnung (28) zum Speichern einer Anzahl (28a) von Weißpegelkompressionskurven sowie eine Wähleinrichtung (29) zum Auswählen einer Weißpegelkompressionskurve abhängig vom primären Videosignal enthält.

2. Röntgenuntersuchungsgerät mach Anspruch 1, dadurch gekennzeichnet, daß
- die Abbildungsanordnung eine Signalisieranordnung (26) zum Abgeben eines Steuersignals abhängig vom primären Videosignal an die Wählanordnung (29) zum Steuern der Auswahl einer Weißpegelkompressionskurve enthält.

3. Röntgenuntersuchungsgerät nach einem der vorangehenden Ansprüche, dadurch gekennzeichnet, daß die Abbildungsanordnung eine Rechenschaltung (30) zum Bestimmen eines dynamischen Bereichs eines fluoroskopischen Röntgenbildes und zum Errechnen eines dynamischen Bereichs eines Röntgenbelichtungsbildes daraus enthält.

4. Röntgenuntersuchungsgerät nach einem der vorangehenden Ansprüche, dadurch gekennzeichnet, daß die Abbildungsanordnung eine Rechenschaltung (30) zum Bestimmen eines dynamischen Bereichs eines vorbestrahlten Röntgenbildes und zum Errechnen eines dynamischen Bereichs eines Röntgenbelichtungsbildes daraus enthält.

5. Röntgenuntersuchungsgerät mit
- einer Röntgenquelle (1) zum Erzeugen eines Röntgenbildes durch Anstrahlen eines Objekts (2),
- einer Abbildungsanordnung (11) mit
- einem Röntgenbildverstärker (5) zum Umsetzen des Röntgenbildes in ein sichtbares Bild,
- einer Bilderfassungseinrichtung (10) zum Gewinnen des an einem Ausgangsschirm des Bildverstärkers (5) erzeugten sichtbaren Bildes und zum Erzeugen eines primären Videosignals, und
- Abbildungssteuermitteln (41) zum Einstellen von Abbildungsparametern,
- einem Videoverstärker (21) zum Umsetzen des primären Videosignals in ein verstärktes Videosignal,
- wobei der Videoverstärker mit einem Steuereingang (27) an die Abbildungssteuermittel (41) zum Einstellen des Verstärkungsverhältnisses des Videoverstärkers gekoppelt ist,
dadurch gekennzeichnet, daß
- die Abbildungsanordnung folgendes enthält:
- einen Analog/Digitalwandler (23) zum Ableiten eines digitalen Videosignals aus dem verstärkten Videosignal, und
- eine Weißpegelkompressionsanordnung (22) zum Anpassen des dynamischen Bereichs des verstärkten Videosignals an den Bereich des Analog/Digitalwandlers,
- wobei das Weißpegelkompressions-Einstellmittel eine Speicheranordnung (28) zum Speichern einer Anzahl (28a) von Weißpegelkompressionskurven sowie eine Wähleinrichtung (29) zum Auswählen einer Weißpegelkompressionskurve enthält, und
- eine Signalisieranordnung (26) zum Abgeben eines Steuersignals an die Wähleinrichtung (29) zum Steuern einer Weißpegelkompressionskurve, und
- das Röntgenuntersuchungsgerät ein Steuerpult (31) mit einem Befehlsmittel (32) enthält,
- das Befehlsmittel (32) mit der Signalisieranordnung (26) gekoppelt ist, und
- das Befehlsmittel (32) zum Abgeben eines Steuersignals an die Signalisieranordnung (26) zum Aktivieren der Signalisieranordnung (26) zum Steuern der Wähleinrichtung (29) angeordnet ist.

## Revendications

1. Appareil d'examen radiologique comprenant
- une source de rayons X (1) pour produire une image à rayons X par irradiation d'un objet (2),
- une disposition de formation d'image (11) contenant
- un intensificateur d'image à rayons X (5) permettant de convertir l'image à rayons X en une image visible,
- un dispositif d'acquisition d'images (10) permettant d'acquérir l'image visible produite sur un écran de sortie de l'intensificateur d'image (5) et de produire un signal vidéo primaire, et
- un moyen de commande de formation d'image (41) pour régler les paramètres de formation d'image,
- un amplificateur vidéo (21) permettant de convertir le signal vidéo primaire en un signal vidéo amplifié,
- ledit amplificateur vidéo présentant une entrée de commande (27) couplée aux moyens de commande de formation d'image (41) afin de régler le rapport d'amplification de l'amplificateur vidéo en fonction de la valeur moyenne des amplitudes de signal du signal vidéo primaire,
caractérisé en ce que,
- la disposition de formation d'image comprend
- un circuit arithmétique (30) pour détecter la gamme dynamique du signal vidéo primaire,
- un convertisseur analogique - numérique (23) pour dériver un signal vidéo numérique du signal vidéo amplifié et
- un dispositif de compression du blanc (22) pour adapter la gamme dynamique du signal vidéo amplifié à la gamme du convertisseur analogique - numérique,
- le dispositif de compression du blanc étant réglable en fonction de la valeur moyenne des amplitudes de signal et de la gamme dynamique du signal vidéo primaire et en ce que
- ledit moyen de réglage de la compression du blanc est muni d'un dispositif de mémoire (28) pour le stockage d'une collection (28a) de courbes de la compression du blanc et d'un dispositif de sélection (29) pour la sélection en fonction du signal vidéo primaire d'une courbe de compression du blanc.

2. Appareil d'examen radiologique selon la revendication 1, caractérisé en ce que
- la disposition de formation d'image est munie d'un dispositif de signalisation (26) pour fournir, en fonction du signal vidéo primaire, un signal de commande au dispositif de sélection (29) pour commander la sélection d'une courbe de compression du blanc.

3. Appareil d'examen radiologique selon l'une des revendications précédentes, caractérisé en ce que
- la disposition de formation d'image est munie d'un circuit arithmétique (30) pour déterminer une gamme dynamique d'une image de rayons X fluoroscopique et pour en calculer une gamme dynamique d'une image d'exposition à rayons X.

4. Appareil d'examen radiologique selon l'une des revendications précédentes, caractérisé en ce que
- la disposition de formation d'image est munie d'un circuit arithmétique (30) disposé pour
- déterminer une gamme dynamique d'une image d'irradiation préalable de rayons X et
- en calculer une gamme dynamique d'une image d'exposition de rayons X.

5. Appareil d'examen radiologique comprenant
- une source de rayons X (1) permettant de produire une image à rayons X par irradiation d'un objet (2),
- une disposition de formation d'image (11) contenant
- un intensificateur d'image à rayons X (5) permettant de convertir l'image à rayons X en une image visible,
- un dispositif d'acquisition d'images (10) permettant d'acquérir l'image visible produite sur un écran de sortie de l'intensificateur d'image (5) et de produire un signal vidéo primaire, et
- des moyens de commande de formation d'image (41) pour régler les paramètres de formation d'image,
- un amplificateur vidéo (21) permettant de convertir le signal vidéo primaire en un signal vidéo amplifié,
- ledit amplificateur vidéo présentant une entrée de commande (27) couplée au moyen de commande de formation d'image (41) afin de régler le rapport d'amplification de l'amplificateur vidéo,
caractérisé en ce que,
- la disposition de formation d'image comprend
- un convertisseur analogique - numérique (23) pour dériver un signal vidéo numérique du signal vidéo amplifié et
- un dispositif de compression du blanc (22) pour adapter la gamme dynamique du signal vidéo amplifié à la gamme du convertisseur analogique-numérique,
- ledit moyen de réglage de la compression du blanc est muni d'un dispositif de mémoire (28) pour le stockage d'une collection (28a) de courbes de la compression du blanc et d'un dispositif de sélection (29) pour la sélection d'une courbe de compression du blanc et
- un dispositif de signalisation (26) pour fournir un signal de commande au dispositif de sélection (29) pour commander la sélection d'une courbe de compression du blanc et
- l'appareil d'examen radiologique est muni d'un pupitre de commande (31) comprenant un moyen de commande (32)
- le moyen de commande (32) étant couplé au dispositif de signalisation (26)
- le moyen de commande (32) étant disposé pour fournir un signal de commande au dispositif de signalisation (26) afin d'activer le dispositif de signalisation (26) pour la commande du dispositif de sélection (29).
